# EUROPEAN PATENT SPECIFICATION

(11) **EP 2 999 100 B1**
(45) Date of publication and mention of the grant of the patent: **27.12.2017**
(21) Application number: 14185346.5
(22) Date of filing: 18.09.2014
(51) Int. Cl.: H02K 17/16

(54) **A method for producing a squirrel-cage rotor**
Verfahren zur Herstellung eines Käfigläuferrotors
Procédé de fabrication d'un rotor en cage

(43) Date of publication of application: 23.03.2016
(73) Proprietor: Bombardier Transportation GmbH, 10785 Berlin (DE)
(72) Inventor: Perucchi, Maurizio, IT-26859 Valera Fratta (Lodi) (IT); Fröling, Claes, SE-723 39 Västerås (SE); Lindberg, Johan, SE-722 10 Västerås (SE)
(74) Representative: Olsson, Jan

(56) References cited:
- JP-A- S 563 559
- JP-A- S5 686 060
- JP-A- 2011 087 373
- US-A- 2 953 826

## Description

### TECHNICAL FIELD OF THE INVENTION AND BACKGROUND ART

The present invention relates to a method for producing a squirrel-cage rotor of an electric induction machine.

The invention relates to a rotor for electric induction machines, i.e. asynchronous electric machines, which may operate as motor and/or generator. The invention is not restricted to any particular use of such electric machines, but the use of such electric machines for producing a traction force in track-bound vehicles will hereinafter be primarily discussed so as to illuminate but not in any way restrict the invention and the objects obtained thereby.

A squirrel-cage rotor of an electric induction machine has a number of rotor conductors in the form of rotor bars connected to each other at each end of the substantially circular cylinder formed by the rotor and extending through the rotor body formed by a stack of steel sheets. By using such a laminated assembly to build the rotor body the efficiency of the machine is increased thanks to a considerable reduction of eddy current losses in the rotor body having such sheets mutually electrically insulated compared to a cast rotor body. A rotor of this type is known through JP 2011 087373 A.

However, the invention relates to die-casting of the rotor body in the sense that a stack of said sheets aligned with openings so as to form rotor slots will have said rotor slots filled by conducting material, such as of Al, for forming said rotor conductors while die-casting said rotor body. To form said rotor conductors through die-casting is both less expensive and results in a more efficiently functioning rotor than the alternative to introduce bars of conducting materials into said openings of a said stack of sheets.

US 2 953 826 A discloses a method using a mould with a flexible sleeve which prevents the casting metal from obstructing the slot openings. JP S56 86060 A discloses a method including the step of removing the aluminium from the slot opening after casting.

JP S56 3559 A discloses a method including the step of filling the slot opening with a heat resistant material before casting and removing the heat resistant material after casting by sandblasting.

Another method for producing a squirrel-cage rotor is known through EP 0 438 442 B1. It is shown in that document how a further slot outside each rotor slot for the rotor conductors is made in the peripheral surface of the rotor body and extends in parallel with said rotor slot while forming an air gap separating peripheral steel sheet portions of the rotor body. Such an air gap is used to determine the performance of the electric machine and improves the overload capacity of the machine. A bridge of sheet material separates the rotor conductor from said air gap and is there for enabling die-casting of said rotor conductors while keeping the cast material within the openings of the sheets intended therefor. However, the present inventor has realized that this bridge reduces the overload capacity of the electric machine, especially at high numbers of revolutions. A high leakage flow will then pass through said bridge, and when this bridge is saturated a part of such a leakage flow will also pass through the air gap.

### SUMMARY OF THE INVENTION

The object of the present invention is to provide a method for producing a squirrel-cage rotor of an electric induction machine being improved in at least some aspect with respect to such methods already known.

This object is according to the invention obtained by providing a method comprising the steps of appended claim 1.

By making said two circumferentially separated cuts in each of the plurality of steel sheets forming said stack and machining the rotor body by peripherally removing material of said stack of sheets to a said depth a said air gap forming slot extending from the periphery of the rotor body all the way to the respective rotor conductor will be formed and a die-casting of the rotor conductors while keeping the cast material within the slots therefor will still be possible.

Thus, the rotor body will be "bridgeless" which results in an improved overload capacity of an electric induction machine provided with such a rotor since the total leakage flow will be considerably reduced with respect to a rotor with presence of a said bridge because a leakage flow will much easier pass through the bridge than through air. A said machining of the rotor body is normally in anyway carried out after said die-casting procedure, since the steel sheets to be used to form the lamination of the rotor and the stator are punched coaxially from the same sheet of electrical steel, so that material has been removed from the rotor for obtaining a gap between the rotor and the stator in said electric machine.

According to an embodiment of the invention Al is used as cast compound in said die-casting step. Attractive properties of Al as said rotor conductor material are the low density and high electric conductivity thereof.

According to another embodiment of the invention said machining of the rotor body is carried out by turning.

Further advantages as well as advantageous features of the invention will appear from the following description.

### BRIEF DESCRIPTION OF THE DRAWINGS

With reference to the appended drawings, below follows a brief description of a method for producing a rotor and a rotor already known as well as a specific description of an embodiment of the invention cited as an example.

In the drawings:
- Fig 1: is a cross-section view illustrating the general construction of an electric induction machine of the type to which the present invention is directed,
- Fig 2: is a view on a steel sheet for a known squirrel-cage rotor of an electric induction machine,
- Fig 3: is an enlarged simplified view of a peripheral part of a stack formed by a plurality of steel sheets according to Fig 2 after a step of die-casting rotor conductors,
- Fig 4: is a view according to Fig 3 showing the appearance of said part of the rotor after carrying out a machining step, and
- Fig 5-7: are views corresponding to Figs 3 and 4 illustrating a method according to the present invention for producing a squirrel-cage rotor of an electric induction machine as well as such a rotor.

### BRIEF DESCRIPTION OF THE GENERAL CONSTRUCTION OF AN ELECTRIC INDUCTION MACHINE AND A KNOWN SQUIRREL-CAGE ROTOR THEREOF

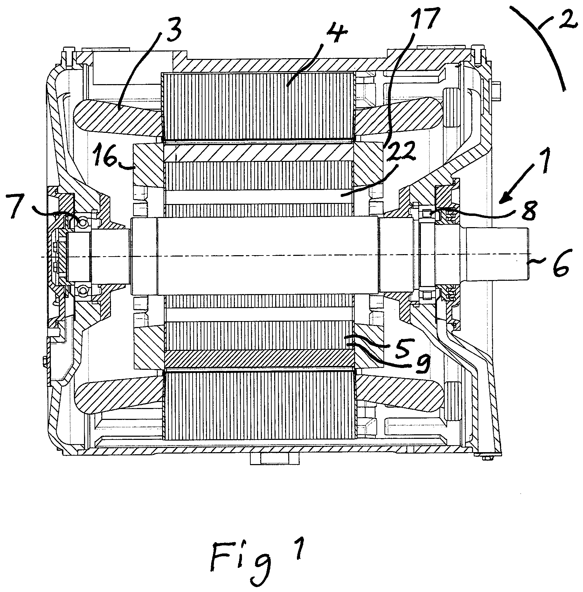

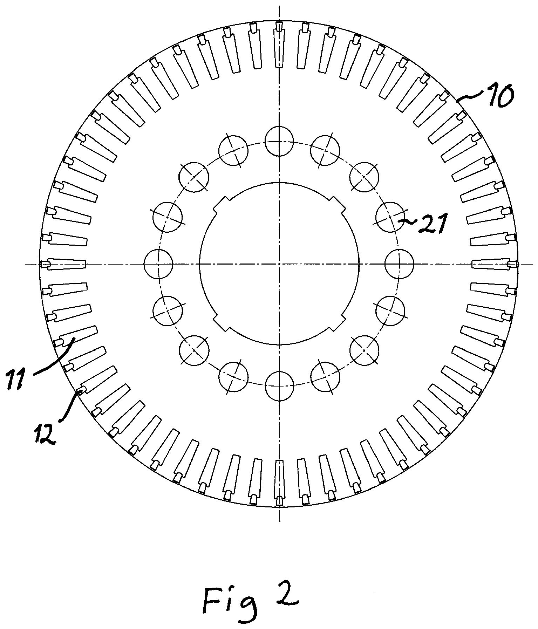

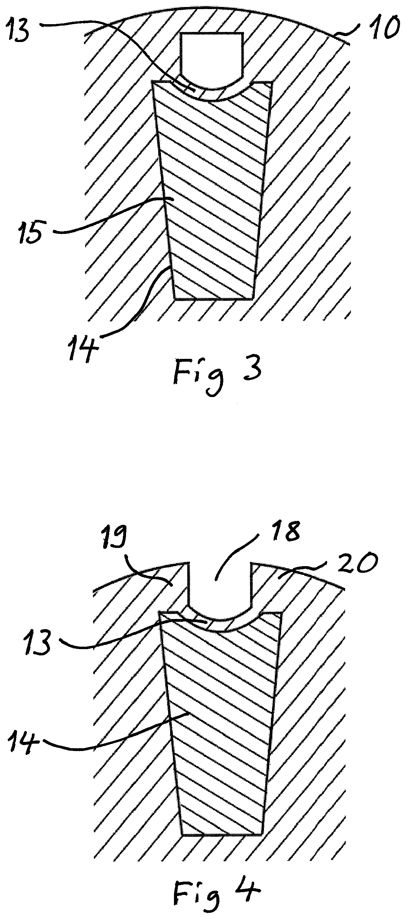

A track-bound vehicle electric induction machine 1 to be arranged in a track-bound vehicle 2 is schematically shown in Fig 1. The electric machine transforms electrical power into mechanical power during traction mode while working as a motor and transforms mechanical power into electrical power during breaking mode while working as a generator. Two such machines from the same motor bogie of the vehicle may be connected in parallel to one electric converter transmitting an alternating voltage to windings 3 of a stator 4 of the machine. The machine has a rotor 5 rotatably mounted inside the stator through a shaft 6 received in bearings 7, 8. The rotor 5 is a so-called squirrel-cage rotor with a rotor body formed by a stack of steel sheets with the appearance shown in Fig 2. Such steel sheets have typically a thickness in the order of 0.5 mm, and 400-600 such sheets are typically stacked upon each other for forming a package with a height of 200-300 mm. It is shown how each such sheet 10 is provided with a plurality of openings 11 uniformly distributed around said sheet and separated from a periphery of the sheet. A further opening 12 separated from each opening 11 by a bridge 13 appears more clearly from Fig 3.

Once said stack is formed rotor slots 14 formed by alignment of said openings 11 are filled by a cast compound, such as Al, in a die-casting step while forming rotor conductors 15 short circuited at each axial end of the rotor body by a conducting ring 16, 17.

Fig 4 illustrates how material has been peripherally removed from the rotor body for obtaining an air gap between the stator and the rotor in said machine, since the stator and the rotor are produced while punching the sheets therefor coaxially from the same sheet of electrical steel. This machining step results in a formation of a further slot 18 from said further opening 12 radially outside each rotor conductor forming an air gap separating peripheral steel sheet portions 19, 20 of the rotor body.

Applying a symmetrical three-phase voltage to the windings 3 of the stator 4 of such an electric induction machine will result in a rotating flux in a magnetic circuit consisting of stator, rotor and air gap between stator and rotor, and this flux will induce a voltage in the rotor conductors 15 which is proportional to the difference in speed between the flux speed and the rotor speed. This voltage will produce a current in the rotor winding consisting of the rotor conductors and the conducting rings, and this rotor current and the stator flux are then producing a mechanical torque on the rotor. The synchronous speed of the rotor will be n=120f/p, in which f is the frequency of the voltage applied to the stator windings and p is the number of poles of the machine. The number of poles is determined by the stator winding and is typically 2, 4 or 6. If the rotor rotates slower than said synchronous speed the machine is in driving mode, and if it rotates faster than said synchronous speed the machine is in braking mode. Holes 21 provided in the steel sheets for forming channels 22 for ventilating the electric machine are also shown in Fig 2.

This is the general structure and function of an electric induction machine of the type to which the present invention is directed.

### DETAILED DESCRIPTION OF AN EMBODIMENT OF THE INVENTION

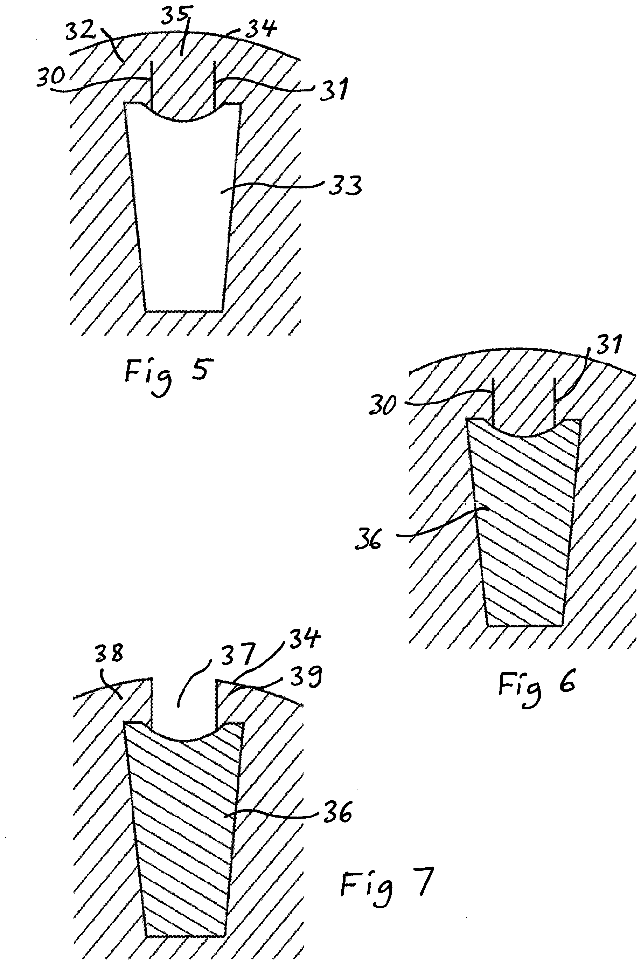

Features characterizing the present invention will now be disclosed while making reference to Figs 5-7. Parts corresponding to parts of the rotor and machine described above are provided with the same reference numerals.

Fig 5 shows how according to the present invention two circumferentially separated cuts 30, 31 are made in each of a plurality of steel sheets 32 used to form a rotor body by being stacked upon each other. The cuts 30, 31 are made in each of a plurality of openings 33 uniformly distributed around the sheet and separated from a periphery 34 of said sheet by a sheet portion 35. The cuts 30, 31 are made substantially radially into said sheet portion 35 towards said periphery 34 of the sheet while ending at a predetermined distance to the periphery.

It is shown in Fig 6 how a rotor body formed by a stack of such sheets is then die-casted while filling each rotor slot with material forming a rotor conductor 36. The rotor body so formed is then machined for peripherally removing material of said stack of sheets to a depth of at least said predetermined distance so as to, for each rotor conductor and therealong, form a slot 37 extending substantially radially from the periphery 34 of the rotor body to said rotor conductor 36 as shown in Fig 7.

Thus, a squirrel-cage rotor of an electric induction machine having no bridge between sheet portions 38, 39 on different sides of a "slot" is formed by this. The absence of said bridge reduces the total possible leakage flux between the portions 38 and 39 and improves by that the overload capacity of the machine. This means that the pull out torque of the machine is increased, in which the pull out torque is the maximum torque the machine can develop in the motor mode thereof for a given frequency and voltage of the alternating voltage applied to the stator windings of the machine.

The invention is of course not in any way restricted to the embodiment thereof described above, but many possibilities to modifications thereof would be apparent to a person with skill in the art without departing from the scope of the invention as defined in the appended claims.

Another material than Al may be used as cast compound for forming the rotor conductors by die-casting.

The number of slots of the rotor may be any suitable for the intended use of the machine.

"Cuts" is here to be interpreted broadly. It is not restricted to the use of a cutting action to obtaining them, but any action resulting in separation of sheet material on opposite sides of such a cut is comprised. Punching, boring, milling and cutting are some of possible ways to obtaining said circumferentially separated cuts.

The distance separating said cuts and by that the width of the slot later reaching the respective rotor conductor may be any suitable for the electric machine. It may for instance be 1/2, 1/3 or even 1 times the width of the rotor conductor facing said slot.

## Claims

1. A method for producing a squirrel-cage rotor (5) of an electric induction machine (1) comprising the steps of
• making two circumferentially separated cuts (30, 31) in each of a plurality of steel sheets (32) from each of a plurality of openings (33) uniformly distributed around said sheet and separated from a periphery (34) of said sheet by a sheet portion (35), said cuts being made substantially radially into said sheet portion towards said periphery of the sheet while ending at a predetermined distance to said periphery,
• stacking said sheets (32) onto each other while aligning said openings (33) so as to form rotor slots extending substantially axially,
• die casting a rotor body while filling each said rotor slot with material forming a rotor conductor (36), and
• machining said rotor body by peripherally removing material of said stack of sheets to a depth of at least said predetermined distance so as to, for each rotor conductor (36) and therealong, form a slot (37) extending substantially radially from the periphery (34) of the rotor body to said rotor conductor (36).

2. A method according to claim 1, **characterized in that** Al is used as cast compound in said die casting step.

3. A method according to claim 1 or 2, **characterized in that** said machining of the rotor body is carried out by turning.

## Patentansprüche

1. Verfahren zum Herstellen eines Käfigläufer-Rotors (5) einer elektrischen Induktionsmaschine (1), umfassend die Schritte
• Herstellen von zwei in Umfangsrichtung getrennten Schnitten (30, 31) in jedem von mehreren Stahlblechen (32) ausgehend von jeder von mehreren Öffnungen (33), die gleichmäßig um das Blech herum verteilt und von einem Umfang (34) des Bleches durch einen Blechabschnitt (35) getrennt sind, wobei die Einschnitte im Wesentlichen radial in den Blechabschnitt zum Umfang des Bleches hin ausgebildet sind, wobei sie in einem vorgegebenen Abstand von dem Umfang enden,
• Aufeinanderstapeln der Bleche (32), wobei die Öffnungen (33) so ausgerichtet werden, dass Rotornuten gebildet werden, die im Wesentlichen axial verlaufen,
• Formgießen eines Rotorkörpers, wobei jede der Rotornuten mit Material gefüllt wird, das einen Rotorleiter (36) bildet, und
• Bearbeiten des Rotorkörpers durch Entfernen von Material am Umfang des Blechstapels bis zu einer Tiefe von mindestens dem vorbestimmten Abstand, sodass für jeden Rotorleiter (36) und entlang desselben eine Nut (37) gebildet wird, die sich im Wesentlichen radial von dem Umfang (34) des Rotorkörpers zu dem Rotorleiter (36) erstreckt.

2. Verfahren nach Anspruch 1, **dadurch gekennzeichnet, dass** in dem Formgießschritt Al als Gusskomponente verwendet wird.

3. Verfahren nach Anspruch 1 oder 2, **dadurch gekennzeichnet, dass** das Bearbeiten des Rotorkörpers durch Drehen ausgeführt wird.

## Revendications

1. Procédé de fabrication d'un rotor (5) à cage d'écureuil d'une machine (1) électrique à induction, comprenant les stades dans lesquels :
• on fait deux entailles (30, 31) séparées circonférentiellement dans chacune d'une pluralité de tôles (32) d'acier à partir de chacune d'une pluralité d'ouvertures 33 réparties uniformément autour de la feuille et séparées d'une périphérie 34 de la feuille par une partie 35 de feuille, les entailles étant faites sensiblement radialement dans la partie de feuille en direction de la périphérie de la feuille, tout en se terminant à une distance déterminée à l'avance de la périphérie,
• on empile les feuilles (32) l'une sur l'autre, tout en alignant les ouvertures (33), de manière à former des encoches de rotor s'étendant sensiblement axialement,
• on coule sous pression un corps de rotor, tout en remplissant chaque encoche de rotor de matière formant un conducteur (36) de rotor et
• on usine le corps de rotor en éliminant périphériquement de la matière de l'empilement de feuilles jusqu'à une profondeur d'au moins la distance déterminée à l'avance, de manière à former, pour chaque conducteur (36) de rotor et tout du long, une encoche (37) s'étendant sensiblement radialement de la périphérie (34) du corps du rotor au conducteur (36) du rotor.

2. Procédé suivant la revendication 1, **caractérisé en ce que** l'on utilise de l'Al comme composé de coulée au stade de coulée sous pression.

3. Procédé suivant la revendication 1 ou 2, **caractérisé en ce que** l'on effectue l'usinage du corps du rotor au tour.
